# EUROPEAN PATENT APPLICATION

(11) **EP 4 604 228 A1**
(43) Date of publication of application: **20.08.2025**
(21) Application number: 23954973.6
(22) Date of filing: 28.11.2023
(51) Int. Cl.: H01M 10/04

(54) **COMPRESSION MECHANISM, COMPRESSION DEVICE, STOCK BIN DEVICE AND BATTERY PRODUCTION LINE**

(30) Priority: 11.10.2023 CN 202311310323
(71) Applicant: Contemporary Amperex Technology (Hong Kong) Limited, Central (HK)
(72) Inventor: LIU, Yang, Ningde, Fujian 352100 (CN); QIU, Shiping, Ningde, Fujian 352100 (CN); ZHAO, Bin, Ningde, Fujian 352100 (CN); YU, Dingshan, Ningde, Fujian 352100 (CN)
(74) Representative: Ziebig Hengelhaupt Intellectual Property Attorneys Patentanwaltskanzlei PartGmbB
(86) International application number: PCT/CN2023/134688
(87) International publication number: WO 2025/076943

(57) **Abstract**

This disclosure discloses a pressurizing mechanism, a pressurizing apparatus, a silo apparatus, and a battery production line. The pressurizing mechanism includes a base and a pressurizing piece. The base is provided with a positioning key. The pressurizing piece is provided with a positioning groove. The positioning key is fitted to the positioning groove to position the pressurizing piece and the base. The positioning groove is provided with an insertion opening running through a bottom wall of the pressurizing piece, and the positioning key is inserted into the positioning groove through the insertion opening.

## Description

### CROSS-REFERENCE TO RELATED APPLICATIONS

This disclosure claims priority to the Chinese patent application No. 202311310323.6, filed on October 11, 2023 and entitled "PRESSURIZING MECHANISM, PRESSURIZING APPARATUS, SILO APPARATUS, AND BATTERY PRODUCTION LINE", which is incorporated herein by reference in its entirety.

### TECHNICAL FIELD

This disclosure relates to the technical field of batteries, and in particular, to a pressurizing mechanism, a pressurizing apparatus, a silo apparatus, and a battery production line.

### BACKGROUND

This section is intended to provide background or context for the implementations disclosed in this disclosure. The description herein is not admitted to be prior art just because it is included in this section.

New energy batteries are increasingly widely used in life and industry. For example, new energy vehicles equipped with batteries have been widely used. In addition, batteries are increasingly used in the field of energy storage, and the like.

Taking a traction battery pack as an example, the traction battery pack includes a plurality of battery modules, and the battery modules need to be pressurized during the assembly process. To accurately and efficiently pressurize battery modules with different sizes, pressurizing pieces of pressurizing apparatus need to be adapted to the sizes of the battery modules, so it is necessary to use different pressurizing pieces to pressurize different battery modules. However, the replacement operation of pressurizing pieces on the existing production line is complicated and the replacement efficiency is low.

### SUMMARY

To solve the above technical problems, this disclosure provides a pressurizing mechanism, a pressurizing apparatus, a silo apparatus, and a battery production line, which can solve the problems of complicated replacement operation and low replacement efficiency of pressurizing pieces.

This disclosure is implemented through the following technical solutions.

A first aspect of this disclosure provides a pressurizing mechanism. The pressurizing mechanism includes:
a base; and
a pressurizing piece arranged on the base, where the base is provided with a positioning key, the pressurizing piece is provided with a positioning groove, and the positioning key is fitted to the positioning groove to position the pressurizing piece and the base; and
the positioning groove is provided with an insertion opening running through a bottom wall of the pressurizing piece, and the positioning key is inserted into the positioning groove through the insertion opening.

The positioning key is arranged on the base, and the pressurizing piece is provided with the positioning groove, so that the pressurizing piece and the base can be positioned through the fitting of the positioning key and the positioning groove. The pressurizing mechanism is simple and convenient to operate, and facilitates the connection and disconnection between the pressurizing piece and the base, thereby alleviating the problems of complicated replacement operation and low replacement efficiency of the pressurizing piece. In addition, the pressurizing piece and the base are positioned through the fitting of the positioning key and the positioning groove, which is conducive the automation to some extent. Further, different types of pressurizing pieces can be provided with positioning keys or positioning grooves adapted to the base, so that different types of pressurizing pieces can share the base, thereby reducing the cost and improving the production efficiency. In addition, with the insertion opening formed in the bottom wall of the pressurizing piece, the positioning key can be inserted into the positioning groove through the insertion opening at the bottom of the pressurizing piece, so that the pressurizing piece can be moved in the height direction and assembled to the base. The operation is simple and reliable, which is conducive to automation.

In some embodiments, the base is provided with an avoidance groove, and the avoidance groove is configured to avoid the pressurizing piece.

The avoidance groove is provided on the base to avoid a protruding portion of the pressurizing piece, so that the pressurizing piece can be more firmly fixed on the base. In addition, the versatility of the base can be improved to adapt to different types of pressurizing pieces.

In some embodiments, the pressurizing piece includes a connecting portion and a pressurizing portion connected to the connecting portion, and the pressurizing portion is provided with the positioning groove.

The pressurizing piece is arranged in a discrete structure including the connecting portion and the pressurizing portion, and is connected to the base through the connecting portion, and comes into contact with a battery module through the pressurizing portion. Therefore, the strength of the connecting portion can be ensured, and the strength of a connecting structure between the pressurizing piece and the base can be improved. In addition, the contact between the pressurizing portion and the battery module can prevent the pressurizing portion from damaging the battery module to some extent. Moreover, the molding and manufacturing are simple.

In some embodiments, the pressurizing portion includes a connecting body and a limiting piece, where the connecting body is provided with a groove, and the limiting piece is arranged at an edge of the groove and defines the positioning groove with the groove.

The pressurizing portion includes the connecting body and the limiting piece, and the limiting piece is disposed at the edge of the groove and defines the positioning groove with the groove. This is conducive to shaping the required positioning groove on the premise of ensuring the strength of the pressurizing portion, so as to realize the connection between the pressurizing piece and the base.

In some embodiments, the positioning groove is provided with an insertion opening running through a bottom wall of the pressurizing piece, and the positioning key is inserted into the positioning groove through the insertion opening.

With the insertion opening formed in the bottom wall of the pressurizing piece, the positioning key can be inserted into the positioning groove through the insertion opening at the bottom of the pressurizing piece, so that the pressurizing piece can be moved in the height direction and assembled to the base. The operation is simple and reliable, which is conducive to automation.

In some embodiments, the pressurizing piece is provided with a grip portion at the top, and the grip portion is configured to cooperate with a manipulator in gripping.

The provision of the grip portion arranged at the top of the pressurizing piece is more conducive to operating the pressurizing piece, thereby further alleviating the problems of complicated replacement operation and low replacement efficiency of the pressurizing piece. The grip portion is configured to cooperate with the manipulator in gripping, which is conducive to the automation of pressurizing piece replacement.

In some embodiments, the base is provided with a plurality of positioning keys.

The plurality of positioning keys can be arranged on the base, that is, the base can position the plurality of pressurizing pieces simultaneously, fully utilizing the space of the base.

In some embodiments, the base includes a base body and a fastener arranged on the base body, and the positioning key is arranged on a side surface of the fastener.

With the fastener provided and the positioning key arranged on the side surface of the fastener, the height of the fastener can be adjusted according to the height of the pressurizing piece, or the height of the positioning key can be adjusted according to the height of the positioning groove, supporting adaptation to more pressurizing pieces. In addition, when the positioning key is inserted into the positioning groove, the side surface of the pressurizing piece can also be attached to the side surface of the fastener, and the bottom surface of the pressurizing piece can also be attached to the surface of the base body, thereby improving the reliability of the connection structure between the pressurizing piece and the base.

In some embodiments, the pressurizing piece includes a connecting body and a limiting piece, where the connecting body is provided with a groove, and the limiting piece is arranged at an edge of the groove and defines the positioning groove with the groove.

The positioning key is arranged on a side surface of the fastener, and a limiting groove is formed between the positioning key and the fastener; and when the positioning key is fitted to the positioning groove, the limiting piece is snapped into the limiting groove to limit the pressurizing piece and the base.

With the limiting groove formed between the positioning key and the fastener, the limiting piece is snapped into the limiting groove when the positioning key is fitted to the positioning groove, so as to limit the pressurizing piece and the base. This further improves the connection reliability between the pressurizing piece and the base.

In some embodiments, the fastener is provided with a fool-proofing groove at the top, and the pressurizing piece is provided with a fool-proofing piece in one-to-one correspondence with the fool-proofing groove at the top, and when the positioning key is fitted to the positioning groove, the fool-proofing piece is snapped into the fool-proofing groove, where dimensions of the fool-proofing pieces of different pressurizing pieces are different.

The fastener is provided with the fool-proofing groove at the top, and the pressurizing piece is provided with the fool-proofing piece in one-to-one correspondence with the fool-proofing groove at the top, so that the accuracy of replacing the pressurizing piece can be ensured, and the wrong pressurizing piece can be prevented from damaging the battery module. In addition, the fool-proofing piece is fitted to the fool-proofing groove, which can further position the pressurizing piece and the base.

In some embodiments, a width of the base is L1, where 100 mm ≤ L1 ≤ 1200 mm.

This can achieve compatibility with more pressurizing pieces, as well as more single-row or double-row pressurizing pieces of more projects, and can also make the structure of a pressurizing apparatus or a silo apparatus compact.

In some embodiments, a width of the base is L1, where 150 mm ≤ L1 ≤ 500 mm.

This can achieve compatibility with more pressurizing pieces, as well as more single-row or double-row pressurizing pieces of more projects, and can further make the structure of the pressurizing apparatus or the silo apparatus more compact.

A second aspect of this disclosure provides a pressurizing apparatus. The pressurizing apparatus includes a tray and the pressurizing mechanism disclosed in any one of the above embodiments. The pressurizing mechanism is arranged on the tray, and the pressurizing mechanism is configured to pressurize a battery module on the tray.

The positioning key is arranged on the base, and the pressurizing piece is provided with the positioning groove, so that the pressurizing piece and the base can be positioned through the fitting of the positioning key and the positioning groove. The pressurizing mechanism is simple and convenient to operate, and facilitates the connection and disconnection between the pressurizing piece and the base, thereby alleviating the problems of complicated replacement operation and low replacement efficiency of the pressurizing piece. In addition, the pressurizing piece and the base are positioned through the fitting of the positioning key and the positioning groove, which is conducive the automation to some extent. Further, different types of pressurizing pieces can be provided with positioning keys or positioning grooves adapted to the base, so that different types of pressurizing pieces can share the base, thereby reducing the cost and improving the production efficiency. In addition, with the insertion opening formed in the bottom wall of the pressurizing piece, the positioning key can be inserted into the positioning groove through the insertion opening at the bottom of the pressurizing piece, so that the pressurizing piece can be moved in the height direction and assembled to the base. The operation is simple and reliable, which is conducive to automation.

A third aspect of this disclosure provides a silo apparatus. The silo apparatus includes a case and the pressurizing mechanism disclosed in any one of the above embodiments. The case is provided with a feeding area and an unloading area. The feeding area and the unloading area are both provided with the pressurizing mechanism.

The positioning key is arranged on the base, and the pressurizing piece is provided with the positioning groove, so that the pressurizing piece and the base can be positioned through the fitting of the positioning key and the positioning groove. The pressurizing mechanism is simple and convenient to operate, and facilitates the connection and disconnection between the pressurizing piece and the base, thereby alleviating the problems of complicated replacement operation and low replacement efficiency of the pressurizing piece. In addition, the pressurizing piece and the base are positioned through the fitting of the positioning key and the positioning groove, which is conducive the automation to some extent. Further, different types of pressurizing pieces can be provided with positioning keys or positioning grooves adapted to the base, so that different types of pressurizing pieces can share the base, thereby reducing the cost and improving the production efficiency. In addition, with the insertion opening formed in the bottom wall of the pressurizing piece, the positioning key can be inserted into the positioning groove through the insertion opening at the bottom of the pressurizing piece, so that the pressurizing piece can be moved in the height direction and assembled to the base. The operation is simple and reliable, which is conducive to automation.

In some embodiments, the feeding area includes a plurality of feeding sub-areas arranged along a height direction, and each of the feeding sub-areas is provided with a plurality of pressurizing mechanisms.

The feeding area is designed to include a plurality of feeding sub-areas arranged along the height direction, so that the space of the case can be fully utilized, the structure is compact, and more pressurizing mechanisms can be placed in the feeding area, improving the production efficiency.

In some embodiments, the unloading area includes a plurality of unloading sub-areas arranged along the height direction, and each of the unloading sub-areas is provided with a plurality of pressurizing mechanisms.

The unloading area is designed to include a plurality of unloading sub-areas arranged along the height direction, so that the space of the case can be fully utilized, the structure is compact, and more pressurizing mechanisms can be placed in the unloading area, improving the production efficiency.

A fourth aspect of this disclosure provides a battery production line including a manipulator, the pressurizing apparatus disclosed in any one of the above embodiments, and the silo apparatus disclosed in any one of the above embodiments. The manipulator is configured to transfer and assemble the pressurizing piece in the feeding area to the base of the pressurizing apparatus, and transfer and assemble the to-be-replaced pressurizing piece in the pressurizing apparatus to the base in the unloading area.

In this way, the movement of the manipulator is electrically controlled. Through the pressurizing mechanism and electrical control, the pressurizing piece can be automatically replaced, reducing the labor cost, improving the replacement efficiency and the production capacity of the production line, and realizing replacement of the end plate pressurizing piece without shutting down the machine.

### BRIEF DESCRIPTION OF DRAWINGS

A person of ordinary skill in the art becomes clearly aware of various other advantages and benefits by reading the following detailed description of exemplary embodiments. The drawings are merely intended to illustrate the preferred implementations, but not to limit this disclosure. Moreover, throughout the accompanying drawings, the same reference signs represent the same parts. In the accompanying drawings:
FIG. 1 is a structural schematic diagram of a battery production line from a first perspective according to some embodiments of this disclosure;
FIG. 2 is a schematic structural view of a battery production line from a second perspective according to some embodiments of this disclosure;
FIG. 3 is a structural schematic diagram of a pressurizing mechanism according to some embodiments of this disclosure;
FIG. 4 is a structural schematic diagram of a pressurizing piece according to some embodiments of this disclosure;
FIG. 5 is an exploded view of a pressurizing piece and a base from a third perspective according to some other embodiments of this disclosure; and
FIG. 6 is an exploded view of a pressurizing piece and a base from a fourth perspective according to some other embodiments of this disclosure.

### Reference signs:

10. base; 10a. positioning key; 10b. avoidance groove; 10c. limiting groove; 11. base body; 12. fastener; 20. pressurizing piece; 20a. positioning groove; 20b. grip portion; 20c. fool-proofing piece; 21. pressurizing portion; 211. connecting body; 212. limiting piece; 22. connecting portion; 100. pressurizing apparatus; 200. silo apparatus; 210. case; 210a. feeding area; 210b. unloading area; 220. storage vehicle; 300. manipulator; and 1000. battery production line.

### DETAILED DESCRIPTION OF EMBODIMENTS

Embodiments of the technical solutions of this disclosure are described in detail below with reference to the drawings. The following embodiments are merely intended to describe the technical solutions of this disclosure more clearly, and are merely exemplary but without hereby limiting the protection scope of this disclosure.

Unless otherwise defined, all technical and scientific terms used herein have the same meanings as normally understood by a person skilled in the technical field of this disclosure. The terms used herein are merely intended to describe specific embodiments and but not to limit this disclosure. The terms "include" and "contain" and any variations thereof in this disclosure are intended as non-exclusive inclusion.

In the description of the embodiments of this disclosure, the technical terms "first", "second" and "third" are merely intended to distinguish between different items but not intended to indicate or imply relative importance or implicitly specify the quantity of the indicated technical features, specific order, or order of precedence. In the description of the embodiments of this disclosure, unless otherwise expressly specified, "a plurality of" means two or more.

Reference to "embodiment" herein means that a specific feature, structure or characteristic described with reference to the embodiment may be included in at least one embodiment of this disclosure. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this disclosure, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between contextually associated objects.

In the description of the embodiments of this disclosure, direction or a positional relationship indicated by the terms such as "length", "width", "thickness", "up", "down", "before", "after", "left", "right", "vertical", "horizontal", "top", "bottom", "in", "out" and "clockwise" is a direction or positional relationship based on the illustration in the drawings, and is merely intended for ease or brevity of description of embodiments of this disclosure, but not intended to indicate or imply that the indicated apparatus or component is necessarily located in the specified direction or constructed or operated or used in the specified direction. Therefore, such terms are not to be understood as a limitation on embodiments of this disclosure.

In the description of the embodiments of this disclosure, unless otherwise explicitly provided and limited, the technical terms such as "mount", "connect", "couple", and "fix" should be understood broadly, which, for example, may refer to a fixed connection, a detachable connection, or an integral connection; or may refer to a mechanical connection or an electrical connection; or may refer to a direct connection or an indirect connection via an intermediate medium; or may refer to a communication between the insides of two elements, or an interaction relationship between two elements. For those of ordinary skill in the art, the specific meanings of the above-mentioned terms in the embodiments of this disclosure may be understood according to specific situations.

In the description of the embodiments of this disclosure, unless otherwise explicitly provided and limited, the technical term "contact" should be broadly understood, which may be direct contact, contact through an intermediate medium layer, contact with no interaction force between the two in contact, or contact with interaction force between the two in contact.

The vigorous promotion of new energy vehicles by the authorities ushers in a great opportunity for the development of new energy vehicles. The safety and stability of vehicles have always been people's top concern. Therefore, improving the safety of new energy vehicles will be one of the important factors that determine whether new energy vehicles can be popularized quickly. As a main component of the battery pack of new energy vehicles, improving the safety of battery modules is an important approach to improving the safety of new energy vehicles.

A battery module usually includes a plurality of battery cells, the battery cells are confined in a module frame formed by welding end plates and side plates. In the assembly process of the module, the end plates at both ends of the module have a certain pre-tightening force on the battery to improve the cycling performance of the battery.

Therefore, in the process of assembling the battery module, it is necessary to pressurize the battery module so that the end plates at both ends of the module have a certain pre-tightening force on the battery. To accurately and efficiently pressurize battery modules with different sizes, pressurizing pieces of pressurizing apparatus need to be adapted to the sizes of the battery modules, so it is necessary to replace different pressurizing pieces to pressurize different battery modules.

However, the pressurizing pieces on the existing production line are usually fixed on a silo or a tray by fastening, which leads to complicated replacement operation and low replacement efficiency of the pressurizing pieces, and is not conducive to automation.

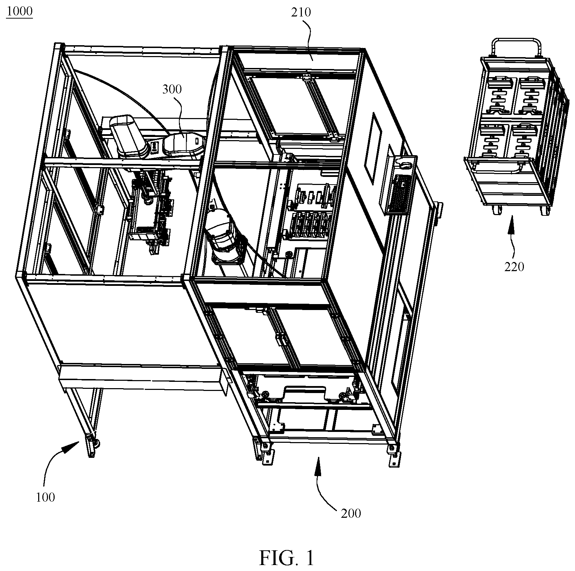

To solve the problems that the replacement operation of the pressurizing pieces is complicated, the replacement efficiency is low, and automation is hard to achieve, referring to FIGs. 1 to 6, this disclosure designs a pressurizing mechanism. The pressurizing mechanism includes a base 10 and a pressurizing piece 20. One of the pressurizing piece 20 and the base 10 is provided with a positioning key 10a, and the other one is provided with a positioning groove 20a. The positioning key 10a is fitted to the positioning groove 20a to position the pressurizing piece 20 and the base 10.

In this pressurizing mechanism, the positioning key 10a is arranged on the base 10, and the positioning groove 20a is arranged on the pressurizing piece 20, so that the pressurizing piece 20 and the base 10 can be positioned through the fitting of the positioning key 10a and the positioning groove 20a. This pressurizing mechanism is simple and convenient to operate, which is conducive to the connection and disconnection between the pressurizing piece 20 and the base 10, thereby alleviating the problems of complicated replacement operation and low replacement efficiency of the pressurizing piece 20. In addition, the pressurizing piece 20 and the base 10 are positioned through the fitting of the positioning key 10a and the positioning groove 20a, which is conducive to automation to some extent. Further, different types of pressurizing pieces 20 can be provided with positioning keys 10a or positioning grooves 20a adapted to the base 10, so that different types of pressurizing pieces 20 can share the base 10, thereby reducing the cost and improving the production efficiency. In addition, with the insertion opening formed in the bottom wall of the pressurizing piece 20, the positioning key 10a can be inserted into the positioning groove 20a through the insertion opening at the bottom of the pressurizing piece 20, so that the pressurizing piece 20 can be moved in the height direction and assembled to the base 10. The operation is simple and reliable, which is conducive to automation.

The pressurizing mechanism of this disclosure can be used not only for a pressurizing apparatus 100, but also for a silo apparatus 200, without being specifically limited.

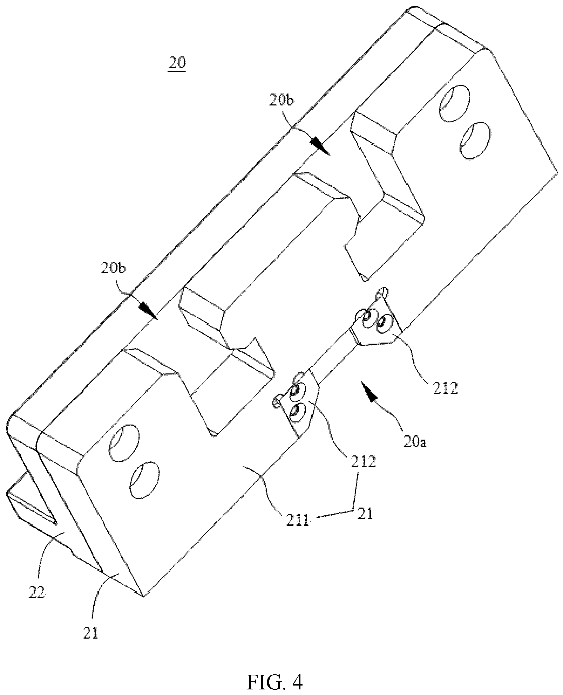

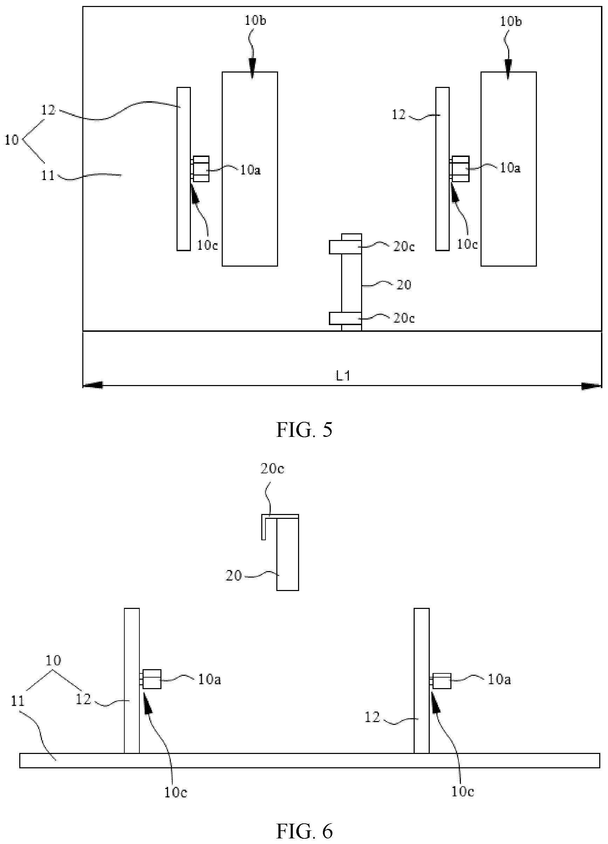

According to some embodiments of this disclosure, referring to FIGs. 1 to 6, FIG. 3 is a structural schematic diagram of a pressurizing mechanism according to some embodiments of this disclosure, FIG. 4 is a structural schematic diagram of a pressurizing piece according to some embodiments of this disclosure, FIG. 5 is an exploded view of a pressurizing piece and a base from a third perspective according to some other embodiments of this disclosure, and FIG. 6 is an exploded view of a pressurizing piece and a base from a fourth perspective according to some other embodiments of this disclosure. This disclosure provides a pressurizing mechanism. The pressurizing mechanism includes a base 10 and a pressurizing piece 20. The base 10 is provided with a positioning key 10a. The pressurizing piece 20 is provided with a positioning groove 20a. The positioning key 10a is fitted to the positioning groove 20a to position the pressurizing piece 20 and the base 10.

The base 10 herein may be a mounting seat of a pressurizing tooling for carrying the pressurizing piece 20 or a silo for carrying the pressurizing piece 20.

The pressurizing piece 20 refers to the pressurizing piece 20 for pressurizing the end plate of the battery module. In the pressurizing process, the pressurizing piece 20 are in contact with the end plate of the battery module, so as to prevent the battery module from being damaged by the squeezing apparatus. Different battery modules are provided with different force-receiving positions, so for different types of battery modules, different pressurizing pieces 20 can be replaced to pressurize the battery modules.

It should be noted that the base 10 may be provided with a positioning groove 20a, and the pressurizing piece 20 may be provided with a positioning key 10a.

Certainly, in other embodiments, the base 10 may be provided with a positioning key 10a and a positioning groove 20a, and the pressurizing piece 20 may be provided with a positioning key 10a and a positioning groove 20a corresponding to the base 10.

The positioning key 10a is fitted to the positioning groove 20a to position the pressurizing piece 20 and the base 10. The positioning and connection between the pressurizing piece 20 and the base 10 can be realized simply by inserting the positioning key 10a into the positioning groove 20a. In other words, there is no need to fasten the connection through fasteners, which is conducive to automation.

For example, the positioning key 10a and the positioning groove 20a are in anti-rotation fit with each other, that is, after positioning the pressurizing piece 20 and the base 10 through the positioning key 10a and the positioning groove 20a, the pressurizing piece 20 cannot rotate relative to the base 10.

According to the pressurizing mechanism provided in the embodiment of this disclosure, the base 10 is provided with the positioning key 10a, and the pressurizing piece 20 is provided with the positioning groove 20a, so that the pressurizing piece 20 and the base 10 are positioned through the fitting of the positioning key 10a and the positioning groove 20a. The installation structure is simple, the operation is convenient, and the connection and disconnection between the pressurizing piece 20 and the base 10 are facilitated, thereby solving the problems of complicated replacement operation and low replacement efficiency of the pressurizing piece 20. In addition, the pressurizing piece 20 and the base 10 are positioned through the fitting of the positioning key 10a and the positioning groove 20a, which is conducive to automation to some extent. Further, different types of pressurizing pieces 20 can be provided with positioning keys 10a or positioning grooves 20a adapted to the base 10, so that different types of pressurizing pieces 20 can share the base 10, thereby reducing the cost and improving the production efficiency. In addition, with the insertion opening formed in the bottom wall of the pressurizing piece 20, the positioning key 10a can be inserted into the positioning groove 20a through the insertion opening at the bottom of the pressurizing piece 20, so that the pressurizing piece 20 can be moved in the height direction and assembled to the base 10. The operation is simple and reliable, which is conducive to automation.

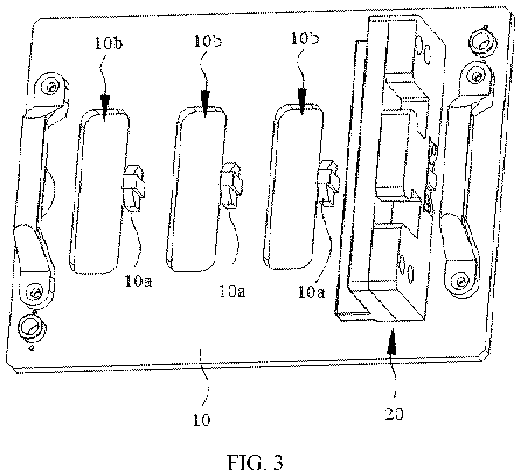

In some embodiments, referring to FIGs. 3 and 5, the base 10 is provided with an avoidance groove 10b, and the avoidance groove 10b is configured to avoid the pressurizing piece 20.

It should be noted that the specific shape of the avoidance groove 10b is not limited here, as long as the avoidance groove 10b can be configured to avoid the pressurizing piece 20. For example, the shape of the avoidance groove 10b is polygonal, circular, elliptical or irregular.

It should be noted that the size of the avoidance groove 10b is not limited here. In some embodiments, the avoidance groove 10b penetrates the base 10, for example, when the base 10 is a silo. Certainly, in other embodiments, the base 10 may be recessed to form the avoidance groove 10b.

To adapt to different types of battery modules, some pressurizing pieces 20 will form special-shaped protrusions for better pressurizing the battery modules. In this embodiment, the avoidance groove 10b is provided on the base 10 to avoid the protruding portion of the pressurizing piece 20, so that the pressurizing piece 20 can be more firmly fixed on the base 10. In addition, the versatility of the base 10 can be improved to adapt to different types of pressurizing pieces 20.

In some embodiments, referring to FIGs. 3 and 4, the pressurizing piece 20 includes a connecting portion 22 and a pressurizing portion 21 connected to the connecting portion 22. The pressurizing portion 21 is provided with a positioning groove 20a.

For example, the connecting portion 22 and the pressurizing portion 21 may be discrete structures. The discrete connecting portion 22 and the discrete pressurizing portion 21 are conducive to forming the required structure.

Certainly, the pressurizing piece 20 may also be of an integrated structure. The integrated pressurizing piece 20 can reduce the number of components, shorten the assembly time and improve the assembly efficiency.

The connecting portion 22 and the pressurizing portion 21 are discrete in this embodiment of this disclosure, so that they can be connected to the base 10 through the connecting portion 22 and come into contact with the battery module through the pressurizing portion 21.

The connection manner between the connecting portion 22 and the pressurizing portion 21 is not limited herein. For example, the connecting portion 22 and the pressurizing portion 21 can be connected by magnetic attraction, snap connection, fastening connection or plug connection.

The fastening connection includes, but is not limited to, screw connection, bolt connection, rivet connection, or the like.

The specific material of the connecting portion 22 is not limited herein, for example, it can be a metal piece, so that the strength of the connecting portion 22 can be ensured, and the strength of the connecting structure between the pressurizing piece 20 and the base 10 can be improved.

The specific material of the pressurizing portion 21 is not limited herein, for example, it can be a plastic piece or a rubber piece, so that the pressurizing portion 21 can be prevented from damaging the battery module to some extent. Moreover, the molding and manufacturing are simple.

The pressurizing piece 20 is arranged in a discrete structure including the connecting portion 22 and the pressurizing portion 21, and is connected to the base 10 through the connecting portion 22 and comes into contact with the battery module through the pressurizing portion 21. Therefore, the strength of the connecting portion 22 can be ensured, and the strength of the connecting structure between the pressurizing piece 20 and the base 10 can be improved. In addition, the contact between the pressurizing portion 21 and the battery module can prevent the pressurizing portion 21 from damaging the battery module to some extent. Moreover, the molding and manufacturing are simple.

In some embodiments, referring to FIGs. 3 and 4, the pressurizing portion 21 includes a connecting body 211 and a limiting piece 212. The connecting body 211 is provided with a groove. The limiting piece 212 is arranged at the edge of the groove and defines a positioning groove 20a with the groove.

For example, the connecting body 211 and the limiting piece 212 may be discrete. The discrete connecting body 211 and the limiting piece 212 are conducive to forming the required structure.

Certainly, the pressurizing portion 21 may be an integrated structure. The integrated pressurizing portion 21 can reduce the number of components, shorten the assembly time, and improve the assembly efficiency.

The connecting body 211 is provided with a groove, and the specific shape of the groove is not limited herein.

The pressurizing portion 21 is of a discrete structure including the connecting body 211 and the limiting piece 212, and the limiting piece 212 is disposed at the edge of the groove and defines the positioning groove 20a with the groove, so it is conducive to shaping the required positioning groove 20a on the premise of ensuring the strength of the pressurizing portion 21, so as to realize the connection between the pressurizing piece 20 and the base 10.

In some embodiments, referring to FIGs. 3 and 4, the positioning groove 20a has an insertion opening penetrating the bottom wall of the pressurizing piece 20. The positioning key 10a is inserted into the positioning groove 20a through the insertion opening.

The positioning groove 20a is provided with an insertion opening running through a bottom wall of the pressurizing piece 20, that is, the positioning groove 20a penetrates through the bottom wall of the pressurizing piece 20 to form the insertion opening, so that the positioning key 10a can be inserted into the positioning groove 20a through the insertion opening at the bottom of the pressurizing piece 20.

With the insertion opening formed in the bottom wall of the pressurizing piece 20, the positioning key 10a can be inserted into the positioning groove 20a through the insertion opening at the bottom of the pressurizing piece 20, so that the pressurizing piece 20 can be moved in the height direction and assembled to the base 10. The operation is simple and reliable, which is conducive to automation.

In some embodiments, referring to FIGs. 3 and 4, the pressurizing piece 20 is provided with a grip portion 20b at the top. The grip portion 20b is configured to cooperate with the manipulator 300 in gripping.

The pressurizing piece 20 is provided with a grip portion 20b at the top. With the grip portion 20b arranged at the top of the pressurizing piece 20, it is more conducive to operating the pressurizing piece 20, thereby further alleviating the problems of complicated replacement operation and low replacement efficiency of the pressurizing piece 20.

The grip portion 20b is configured to cooperate with the manipulator 300 in gripping, thereby facilitating the automation of the replacement of the pressurizing piece 20. Further, the provision of the grip portion 20b can improve the reliability of the manipulator 300 in griping the pressurizing piece 20.

The grip portion 20b may be arranged at the middle position of the top of the pressurizing piece 20, at arranged both ends of the top of the pressurizing piece 20, or directly gripped by the manipulator 300 at both ends of the top of the pressurizing piece 20.

The grip portion 20b is not limited to a specific structure herein, and it may be a protrusion formed on the pressurizing piece 20 or a groove formed on the pressurizing piece 20. This embodiment of this disclosure uses the grip portion 20b being a groove formed on the pressurizing piece 20 as an example.

For example, the grip portion 20b includes a limiting flange protrudingly formed on a wall of the groove and configured to limit the manipulator 300, further improving the reliability of the manipulator 300 in griping the pressurizing piece 20.

For example, the grip portion 20b is formed on the connecting portion 22, so that the strength of the grip portion 20b can be ensured, thereby further improving the reliability of the manipulator 300 in griping the pressurizing piece 20.

With the grip portion 20b arranged at the top of the pressurizing piece 20, it is more conducive to operating the pressurizing piece 20, thereby further alleviating the problems of complicated replacement operation and low replacement efficiency of the pressurizing piece 20. The grip portion 20b is configured to cooperate with the manipulator 300 in gripping, thereby facilitating the automation of the replacement of the pressurizing piece 20.

In some embodiments, referring to FIG. 3, the base 10 is provided with a plurality of positioning keys 10a, for example, 2, 3, 4, 5, 6, 7, 8, 9, or the like.

A plurality of positioning keys 10a are disposed on the base 10, that is, the base 10 can position a plurality of pressurizing pieces 20 simultaneously, fully utilizing the space of the base 10.

In a specific embodiment, the base 10 is provided with four positioning keys 10a.

In some embodiments, referring to FIGs. 3 to 6, the base 10 includes a base body 11 and a fastener 12 disposed on the base body 11. The positioning key 10a is provided on a side surface of the fastener 12.

For example, the base body 11 and the fastener 12 may be discrete structures. The discrete base body 11 and fastener 12 are conducive to forming the required structure.

Certainly, the base 10 can also be an integrated structure. The integrated base 10 can reduce the number of components, shorten the assembly time, and improve the assembly efficiency.

With the fastener 12 provided and the positioning key 10a arranged on the side surface of the fastener 12, the height of the fastener 12 can be adjusted according to the height of the pressurizing piece 20, or the height of the positioning key 10a can be adjusted according to the height of the positioning groove 20a, supporting adaptation to more pressurizing pieces 20. In addition, when the positioning key 10a is inserted into the positioning groove 20a, the side surface of the pressurizing piece 20 can also be attached to the side surface of the fastener 12, and the bottom surface of the pressurizing piece 20 can also be attached to the surface of the base body 11, thereby improving the reliability of the connection structure between the pressurizing piece 20 and the base 10.

In some embodiments, referring to FIGs. 3 and 4, the pressurizing piece 20 includes a connecting body 211 and a limiting piece 212. The connecting body 211 is provided with a groove. The limiting piece 212 is arranged at the edge of the groove and defines a positioning groove 20a with the groove. The positioning key 10a is arranged on the side surface of the fastener 12, and a limiting groove 10c is formed between the positioning key 10a and the fastener 12. When the positioning key 10a is fitted to the positioning groove 20a, the limiting piece 212 is fitted into the limiting groove 10c to limit the pressurizing piece 20 and the base 10.

The positioning key 10a is arranged on the side surface of the fastener 12, and a limiting groove 10c is formed between the positioning key 10a and the fastener 12. The specific type of the limiting groove 10c is not limited herein, for example, a part of an area of the positioning key 10a near one end of the fastener 12 is recessed inward, and the concave area and the side surface of the fastener 12 jointly define the limiting groove 10c.

The limiting groove 10c may surround the peripheral outer surface of the positioning key 10a, or it may partially surround the peripheral outer surface of the positioning key 10a.

With the limiting groove 10c formed between the positioning key 10a and the fastener 12, the limiting piece 212 is snapped into the limiting groove 10c when the positioning key 10a is fitted to the positioning groove 20a, so as to limit the pressurizing piece 20 and the base 10. This further improves the connection reliability between the pressurizing piece 20 and the base 10.

In some embodiments, referring to FIGs. 5 and 6, the fastener 12 is provided with a fool-proofing groove at the top. The pressurizing piece 20 is provided with a fool-proofing piece 20c in one-to-one correspondence with the fool-proofing groove at the top, and when the positioning key 10a is fitted to the positioning groove 20a, the fool-proofing piece 20c is snapped into the fool-proofing groove. The fool-proofing pieces 20c of different pressurizing pieces 20 are different.

To distinguish different pressurizing pieces 20, the wrong pressurizing piece 20 is prevented from being assembled to the base 10, thereby preventing the wrong pressurizing piece 20 from damaging the battery module. With the fool-proofing pieces 20c of different pressurizing pieces 20 designed to be different, it is possible to prevent the wrong pressurizing pieces 20 from being assembled to the base 10, and ensure the accuracy of replacing the pressurizing pieces 20 while automatically switching between different models.

It should be noted that the fool-proofing pieces 20c of different pressurizing pieces 20 are different, for example, the sizes of the fool-proofing pieces 20c of different pressurizing pieces 20 are different, or the shapes of the fool-proofing pieces 20c of different pressurizing pieces 20 are different.

The fastener 12 is provided with a fool-proofing groove at the top, and the pressurizing piece 20 is provided with a fool-proofing piece 20c in one-to-one correspondence with the fool-proofing groove at the top, so that the accuracy of replacing the pressurizing piece 20 can be ensured, and the wrong pressurizing piece 20 can be prevented from damaging the battery module. In addition, the fool-proofing piece 20c is fitted to the fool-proofing groove, which can further position the pressurizing piece 20 and the base 10.

In some embodiments, referring to FIG. 5, a width of the base 10 is L1, where 100 mm ≤ L1 ≤ 1200 mm.

For example, the width L1 of the base 10 can be measured by a vernier caliper at a temperature of 25°C.

For example, the width L1 of the base 10 may be 100 mm, 105 mm, 120 mm, 125 mm, 130 mm, 149 mm, 171 mm, 200 mm, 218 mm, 279 mm, 301 mm, 340 mm, 341 mm, 395 mm, 412 mm, 498 mm, 520 mm, 585 mm, 606 mm, 666 mm, 702 mm, 803 mm, 926 mm, 990 mm, 1000 mm, 1010 mm, 1122 mm, 1130 mm, 1117 mm, 1200 mm, or the like.

The width L1 of the base 10 is 100 mm ≤ L1 ≤ 1200 mm, achieving compatibility with more types of pressurizing pieces 20, thereby improving the versatility of the base 10. For example, if the width of the base 10 is set to be large enough, it can be compatible with more pressurizing pieces 20, it can be compatible with more single-row or double-row pressurizing pieces 20 of more projects, and it can make the structure of the pressurizing apparatus 100 or the silo apparatus 200 compact.

In some embodiments, referring to FIG. 5, a width of the base 10 is L1, where 150 mm ≤ L1 ≤ 500 mm.

For example, the width L1 of the base 10 may be 150 mm, 170 mm, 201 mm, 215 mm, 250 mm, 280 mm, 298 mm, 300 mm, 315 mm, 322 mm, 338 mm, 340 mm, 355 mm, 360 mm, 366 mm, 382 mm, 400 mm, 426 mm, 430 mm, 440 mm, 450 mm, 462 mm, 470 mm, 487 mm, 500 mm, or the like.

The width L1 of the base 10 is 150 mm ≤ L1 ≤ 500 mm, achieving compatibility with more types of pressurizing pieces 20, thereby improving the versatility of the base 10. For example, if the width of the base 10 is set to be large enough, it can be compatible with more pressurizing pieces 20 and more single-row or double-row pressurizing pieces 20, and it can make the structure of the pressurizing apparatus 100 or the silo apparatus 200 more compact.

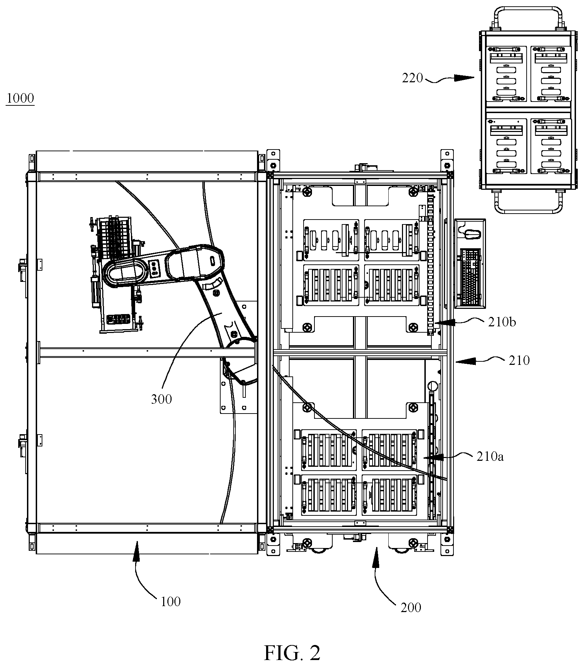

According to some embodiments of this disclosure, referring to FIGs. 1 and 2, this disclosure further provides a pressurizing apparatus 100. The pressurizing apparatus 100 includes a tray and the pressurizing mechanism disclosed in any one of the above embodiments. The pressurizing mechanism is arranged on the tray. The base 10 is configured to carry the pressurizing piece 20. The pressurizing piece 20 can be configured to pressurize the battery module.

In an embodiment of this disclosure, the pressurizing apparatus 100 is configured to pressurize the battery module.

The pressurizing apparatus 100 may further include a driving mechanism configured to drive the pressurizing piece 20 to reciprocate, thereby exerting pressure on the battery module.

One of the pressurizing piece 20 and the base 10 is provided with the positioning key 10a, and the other one is provided with the positioning groove 20a, so that the pressurizing piece 20 and the base 10 can be positioned through the fitting of the positioning key 10a and the positioning groove 20a. The installation structure is simple, the operation is convenient, and the connection and disconnection between the pressurizing piece 20 and the base 10 are facilitated, thereby alleviating the problems of complicated replacement operation and low replacement efficiency of the pressurizing piece 20. In addition, the pressurizing piece 20 and the base 10 are positioned through the fitting of the positioning key 10a and the positioning groove 20a, which is conducive to automation to some extent. Further, different types of pressurizing pieces 20 can be provided with positioning keys 10a or positioning grooves 20a adapted to the base 10, so that different types of pressurizing pieces 20 can share the base 10, thereby reducing the cost and improving the production efficiency.

According to some embodiments of this disclosure, referring to FIGs. 1 and 2, this disclosure further provides a silo apparatus 200. The silo apparatus 200 includes a case 210 and the pressurizing mechanism disclosed in any one of the above embodiments. The case 210 is provided with a feeding area 210a and an unloading area 210b. The feeding area 210a and the unloading area 210b are both provided with the pressurizing mechanism. The base 10 is configured to carry the pressurizing piece 20.

The feeding area 210a configured to carry the pressurizing piece 20 to be used.

The unloading area 210b configured to carry the pressurizing piece 20 to be replaced.

The silo apparatus 200 is provided with the feeding area 210a and the unloading area 210b, thereby alleviating the problems of complicated replacement operation and low replacement efficiency of the pressurizing piece 20.

One of the pressurizing piece 20 and the base 10 is provided with the positioning key 10a, and the other one is provided with the positioning groove 20a, so that the pressurizing piece 20 and the base 10 can be positioned through the fitting of the positioning key 10a and the positioning groove 20a. The installation structure is simple, the operation is convenient, and the connection and disconnection between the pressurizing piece 20 and the base 10 are facilitated, thereby alleviating the problems of complicated replacement operation and low replacement efficiency of the pressurizing piece 20. In addition, the pressurizing piece 20 and the base 10 are positioned through the fitting of the positioning key 10a and the positioning groove 20a, which is conducive to automation to some extent. Further, different types of pressurizing pieces 20 can be provided with positioning keys 10a or positioning grooves 20a adapted to the base 10, so that different types of pressurizing pieces 20 can share the base 10, thereby reducing the cost and improving the production efficiency.

In some embodiments, still referring to FIGs 1 and 2, the feeding area 210a includes a plurality of feeding sub-areas arranged along the height direction, and each feeding sub-area is provided with a plurality of pressurizing mechanisms.

The feeding area 210a includes a plurality of feeding sub-areas arranged along the height direction, so that the space of the case 210 can be fully utilized, the structure is compact, and more pressurizing mechanisms can be placed in the feeding area 210a, improving the production efficiency.

In some embodiments, still referring to FIGs. 1 and 2, the unloading area 210b includes a plurality of unloading sub-areas arranged along the height direction, and each of the unloading sub-areas is provided with a plurality of pressurizing mechanisms.

The unloading area 210b includes a plurality of unloading sub-areas arranged along the height direction, so that the space of the case 210 can be fully utilized, the structure is compact, and more pressurizing mechanisms can be placed in the unloading area 210b, improving the production efficiency.

In some embodiments, still referring to FIGs. 1 and 2, the silo apparatus 200 includes a storage vehicle 220 configured to store the pressurizing mechanisms, and the pressurizing pieces 20 to be used are mounted on the base 10 of the pressurizing mechanism.

According to some embodiments of this disclosure, still referring to FIGs. 1 and 2, this disclosure further provides a battery production line 1000 including a manipulator 300, the pressurizing apparatus 100 disclosed in any one of the above embodiments, and the silo apparatus 200 in any one of the above embodiments. The manipulator 300 is configured to transfer and assemble the pressurizing piece 20 in the feeding area 210a to the base 10 of the pressurizing apparatus 100, and transfer and assemble the to-be-replaced pressurizing piece 20 in the pressurizing apparatus 100 to the base 10 in the unloading area 210b.

For example, the manipulator 300 is, for example, a four-axis robot.

A process of replacing the pressurizing piece 20 may include the following steps:
gripping the to-be-replaced pressurizing piece 20 on the pressurizing apparatus 100 by the manipulator 300, and moving to release the connection between the base 10 and the to-be-replaced pressurizing piece 20 of the pressurizing apparatus 100;
mounting the to-be-replaced pressurizing piece 20 on the base 10 of the unloading area 210b of the silo apparatus 200, for the pressure piece 20 to be replaced to go offline;
according to the characteristics (size, shape, or the like) of the fool-proofing groove at the top of the fastener 12, determining the characteristics (size, shape, or the like) of the fool-proofing groove at the top of the to-be-used pressurizing piece 20, and determining the gripping sequence of the to-be-used pressurizing piece 20;
gripping the to-be-used pressurizing piece 20 in the feeding area 210a of the silo apparatus 200 by the manipulator 300, and moving to release the connection between the base 10 and the to-be-used pressurizing piece 20 in the feeding area 210a of the silo apparatus 200;
mounting the to-be-used pressurizing piece 20 on the base 10 of the pressurizing apparatus 100, to install the to-be-used pressurizing piece 20; and
leaving the base 10 of the pressurizing apparatus 100 flowing into the next station, and the next base 10 flowing into this station, thereby completing the action.

It should be noted that the order of the above steps does not need to be in strict accordance with the order disclosed above. For example, the to-be-used pressurizing piece 20 in the feeding area 210a of the silo apparatus 200 is gripped first by the manipulator 300, and then the to-be-replaced pressurizing piece 20 on the pressurizing apparatus 100 is gripped by the manipulator 300, as long as the pressurizing piece 20 can be replaced.

The movement of the manipulator 300 is electrically controlled. Through the pressurizing mechanism and electrical control, the pressurizing piece 20 can be automatically replaced, reducing the labor cost, improving the replacement efficiency and production capacity of the production line, and realizing replacement of the end plate pressurizing piece 20 without shutting down the machine.

The to-be-used pressurizing piece 20 can be assembled to the base 10 manually, or the to-be-used pressurizing piece 20 can be assembled to the base 10 by the manipulator 300.

The manipulator 300 can grip the two ends of the top of the pressurizing piece 20 or the grip portion 20b of the pressurizing piece 20.

In a specific embodiment, referring to FIGs. 1 to 6, the base 10 is provided with a plurality of positioning keys 10a, and the pressurizing piece 20 is provided with positioning grooves 20a. The base 10 is provided with an avoidance groove 10b, and the avoidance groove 10b is configured to avoid the pressurizing piece 20. The pressurizing piece 20 includes a connecting portion 22 and a pressurizing portion 21 connected to the connecting portion 22. The pressurizing portion 21 is provided with a positioning groove 20a. The positioning groove 20a is provided with an insertion opening penetrating the bottom wall of the pressurizing piece 20. The positioning key 10a is inserted into the positioning groove 20a through the insertion opening. The pressurizing piece 20 is provided with a grip portion 20b at the top. The grip portion 20b is configured to cooperate with the manipulator 300 in gripping. The base 10 includes a base body 11 and a fastener 12 arranged on the base body 11. The positioning key 10a is provided on a side surface of the fastener 12. The pressurizing piece 20 includes a connecting body 211 and a limiting piece 212. The connecting body 211 is provided with a groove. The limiting piece 212 is arranged at the edge of the groove and defines a positioning groove 20a with the groove. The positioning key 10a is arranged on the side surface of the fastener 12, and a limiting groove 10c is formed between the positioning key 10a and the fastener 12. When the positioning key 10a is fitted to the positioning groove 20a, the limiting piece 212 is snapped into the limiting groove 10c to limit the pressurizing piece 20 and the base 10. The fastener 12 is provided with a fool-proofing groove at the top. The pressurizing piece 20 is provided with a fool-proofing piece 20c corresponding one-to-one with the fool-proofing groove at the top. When the positioning key 10a is fitted to the positioning groove 20a, the fool-proofing piece 20c is snapped into the fool-proofing groove. The fool-proofing pieces 20c of different pressurizing pieces 20 are different.

The foregoing embodiments are merely intended to describe the technical solutions of this disclosure but not to limit this disclosure. Although this disclosure has been described in detail with reference to the foregoing embodiments, those of ordinary skill in the art understand that modifications may still be made to the technical solutions described in the foregoing embodiments, or equivalent replacements may still be made to some or all technical features in the technical solutions. Such modifications and replacements do not make the essence of the corresponding technical solutions depart from the scope of the technical solutions of the embodiments of this disclosure, but still fall within the scope of this disclosure. In particular, the various technical features mentioned in the various embodiments may be combined in any manner as long as there is no structural conflict. This disclosure is not limited to the specific embodiments disclosed herein, but includes all technical solutions falling within the scope of this disclosure.

### Industrial practicality

In this disclosure, the movement of the manipulator is electrically controlled. Through the pressurizing mechanism and electrical control, the pressurizing piece can be automatically replaced, reducing the labor cost, improving the replacement efficiency and the production capacity of the production line, and realizing replacement of the end plate pressurizing piece without shutting down the machine.

## Claims

1. A pressurizing mechanism, wherein the pressurizing mechanism comprises:
a base; and
a pressurizing piece arranged on the base, wherein the base is provided with a positioning key, the pressurizing piece is provided with a positioning groove, and the positioning key is fitted to the positioning groove to position the pressurizing piece and the base; and
the positioning groove is provided with an insertion opening running through a bottom wall of the pressurizing piece, and the positioning key is inserted into the positioning groove through the insertion opening.

2. The pressurizing mechanism according to claim 1, wherein the base is provided with an avoidance groove, and the avoidance groove is configured to avoid the pressurizing piece.

3. The pressurizing mechanism according to claim 1, wherein the pressurizing piece comprises a connecting portion and a pressurizing portion connected to the connecting portion, and the pressurizing portion is provided with the positioning groove.

4. The pressurizing mechanism according to claim 3, wherein the pressurizing portion comprises a connecting body and a limiting piece, wherein the connecting body is provided with a groove, and the limiting piece is arranged at an edge of the groove and defines the positioning groove with the groove.

5. The pressurizing mechanism according to any one of claims 1 to 4, wherein the pressurizing piece is provided with a grip portion at the top, and the grip portion is configured to cooperate with a manipulator in gripping.

6. The pressurizing mechanism according to any one of claims 1 to 4, wherein the base is provided with a plurality of positioning keys.

7. The pressurizing mechanism according to claim 1 or 2, wherein the base comprises a base body and a fastener arranged on the base body, and the positioning key is arranged on a side surface of the fastener.

8. The pressurizing mechanism according to claim 7, wherein the pressurizing piece comprises a connecting body and a limiting piece, wherein the connecting body is provided with a groove, and the limiting piece is arranged at an edge of the groove and defines the positioning groove with the groove; and
the positioning key is arranged on a side surface of the fastener, and a limiting groove is formed between the positioning key and the fastener; and when the positioning key is fitted to the positioning groove, the limiting piece is snapped into the limiting groove to limit the pressurizing piece and the base.

9. The pressurizing mechanism according to claim 7, wherein the fastener is provided with a fool-proofing groove at the top, the pressurizing piece is provided with a fool-proofing piece in one-to-one correspondence with the fool-proofing groove at the top, and when the positioning key is fitted to the positioning groove, the fool-proofing piece is snapped into the fool-proofing groove, wherein dimensions of the fool-proofing pieces of different pressurizing pieces are different.

10. The pressurizing mechanism according to any one of claims 1 to 4, wherein a width of the base is L1, wherein 100 mm ≤ L1 ≤ 1200 mm.

11. The pressurizing mechanism according to any one of claims 1 to 4, wherein a width of the base is L1, wherein 150 mm ≤ L1 ≤ 500 mm.

12. A pressurizing apparatus, comprising a tray and the pressurizing mechanism according to any one of claims 1 to 11, wherein the pressurizing mechanism is arranged on the tray, and the pressurizing mechanism is configured to pressurize a battery module on the tray.

13. A silo apparatus, comprising:
a case, wherein the case comprises a feeding area and an unloading area; and
the pressurizing mechanism according to any one of claims 1 to 11, wherein the feeding area and the unloading area are both provided with the pressurizing mechanism.

14. The silo apparatus according to claim 13, wherein the feeding area comprises a plurality of feeding sub-areas arranged along a height direction, and each of the feeding sub-areas is provided with a plurality of the pressurizing mechanisms; and/or the unloading area comprises a plurality of unloading sub-areas arranged along the height direction, and each of the unloading sub-areas is provided with a plurality of the pressurizing mechanisms.

15. A battery production line, comprising:
the pressurizing apparatus according to claim 12;
the silo apparatus according to claim 13; and
a manipulator, wherein the manipulator is configured to transfer and assemble the pressurizing piece in the feeding area to the base of the pressurizing apparatus, and transfer and assemble the to-be-replaced pressurizing piece in the pressurizing apparatus to the base in the unloading area.
